# FASCICULE DE BREVET EUROPEEN

(11) **EP 3 658 410 B1**
(45) Date de publication et mention de la délivrance du brevet: **01.09.2021**
(21) Numéro de dépôt: 18758930.4
(22) Date de dépôt: 25.07.2018
(51) Int. Cl.: B60N 2/56

(54) **MATELASSURE POUR SIEGE DE VEHICULE AUTOMOBILE**
SITZPOLSTERUNG FÜR MOTORFAHRZEUGSITZ
MOTOR VEHICLE SEAT CUSHIONING

(30) Priorité: 28.07.2017 FR 1757241
(43) Date de publication de la demande: 03.06.2020
(73) Titulaire: TESCA France, 75008 Paris (FR)
(72) Inventeur: SANCHEZ, Santiago, 75008 Paris (FR); PUIG, Lluis, 75008 Paris (FR)
(74) Mandataire: Sayettat, Julien Christian
(86) Numéro de dépôt international: PCT/FR2018/051909
(87) Numéro de publication internationale: WO 2019/020942

(56) Documents cités:
- EP-A1- 2 842 798
- WO-A1-02/074016
- WO-A2-2013/050621
- US-A1- 2016 052 432

## Description

L'invention concerne une matelassure pour siège de véhicule automobile et un siège pourvu d'une telle matelassure.

Il est connu de réaliser une matelassure pour siège de véhicule automobile, ladite matelassure comprenant successivement :
- une coiffe de garnissage dudit bloc, ladite coiffe étant composée d'une pluralité de formats associés les uns aux autres, au moins un desdits format étant sous forme de complexe comprenant associées successivement l'une à l'autre :
   o une couche externe de revêtement,
   o une couche médiane en mousse,
   o une couche interne en maille,
- un circuit électrique destiné à être connecté à un générateur électrique, ledit circuit étant à base d'encre conductrice déposée sur une couche de support, ledit circuit s'étendant en regard dudit complexe,
- un bloc de rembourrage élastiquement compressible. EP2842798 montre une matelassure pour siège de véhicule automobile, ladite matelassure comprenant successivement: une coiffe de garnissage d'un bloc de rembourrage, ladite coiffe étant composée d'une pluralité de formats associés les uns aux autres, au moins un desdits format étant sous forme de complexe comprenant associées successivement l'une à l'autre: une couche externe de revêtement, une couche médiane en mousse et une couche interne.

Dans les réalisations connues de l'art antérieur, les matelassures ainsi définies peuvent présenter au moins un des inconvénients suivants :
- la présence de la couche de support - par exemple sous forme de film thermoplastique ou de non tissé - peut contribuer à raidir la matelassure et donc à altérer son confort en enfoncement,
- la couche de support, lorsqu'elle est étanche, comme c'est le cas pour un film thermoplastique, nuit au confort hygrothermique de la matelassure,
- la couche de support peut, notamment lorsqu'elle est sous forme de non tissé, absorber de façon importante l'encre dans son épaisseur, par effet « buvard », ce qui peut nuire aux caractéristiques du circuit électrique.

L'invention a pour but de pallier ces inconvénients.

A cet effet, et selon un premier aspect, l'invention propose une matelassure pour siège de véhicule automobile, ladite matelassure comprenant successivement :
- une coiffe de garnissage dudit bloc, ladite coiffe étant composée d'une pluralité de formats associés les uns aux autres, au moins un desdits format étant sous forme de complexe comprenant associées successivement l'une à l'autre :
   o une couche externe de revêtement,
   o une couche médiane en mousse,
   o une couche interne en maille,
- un circuit électrique destiné à être connecté à un générateur électrique, ledit circuit étant à base d'encre conductrice déposée sur une couche de support, ledit circuit s'étendant en regard dudit complexe,
- un bloc de rembourrage élastiquement compressible,
ladite couche de support étant formée :
- soit par ladite couche interne,
- soit par une couche additionnelle en maille s'interposant entre ladite couche interne et ledit bloc.

On rappelle ici (en référence à l'ouvrage « Le dictionnaire des textiles - Maggy Baum et Chantal Boyeldieu - les éditions de l'industrie textile - 2002) la définition d'une maille :
*« Elément constitutif et fondamental d'une surface textile comportant un réseau plus ou moins lâche de fils entrelacés d'une boucle de fil à travers une autre. Unité élémentaire des textiles façonnés en tricot, crochet, dentelle, tulle, filet. Chaque maille enferme une ou plusieurs boucles de fil réunies différemment les unes aux autres suivant la technique utilisée. En modifiant les caractéristiques de la maille, on obtient ou l'on crée de nouvelles armures, d'autres reliefs. Parties de la maille* : *toute maille est composée de :*
   - *une tête : partie supérieure formant le demi-cercle de la boucle d'aiguille* ;
   - *deux ailes ou jambes : parties étroites de la maille (parties latérales) reliant la tête et les pieds ;*
   - *deux pieds : partie inférieure incurvée de la maille. »*

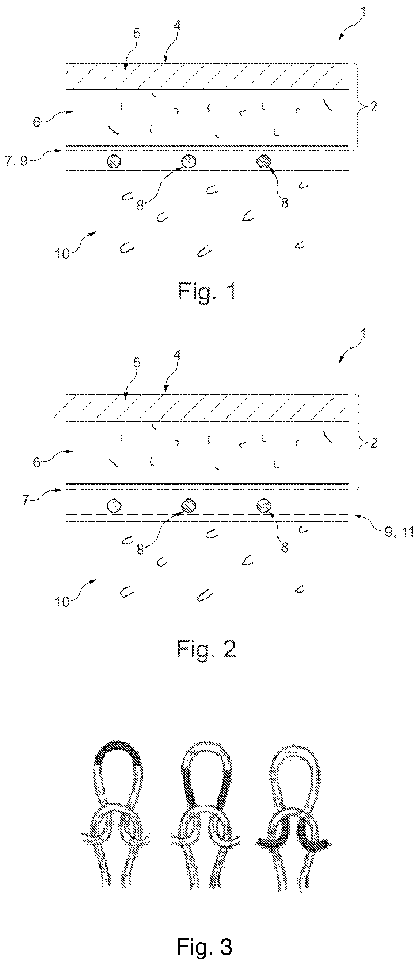

Nota: Ces différentes parties sont représentées en figure 3 présentée ci-après.

Avec l'agencement proposé :
- la couche de support, de par sa nature en maille, est fortement extensible ; l'encre étant elle aussi extensible, la couche de support ne contribue pas à raidir la matelassure,
- la couche de support, de par son caractère poreux, ne nuit pas au confort hygrothermique de la matelassure,
- la couche de support, notamment lorsque son maillage est suffisamment dense, n'absorbe sensiblement pas l'encre dans son épaisseur, ce qui permet de disposer de circuits électriques fiables.

Selon un deuxième aspect, l'invention propose un siège pourvu d'une telle matelassure.

D'autres particularités et avantages de l'invention apparaîtront dans la description qui suit, faite en référence aux figures jointes, dans lesquelles :
- la figure 1 est une vue schématique en coupe partielle d'une matelassure selon une première réalisation,
- la figure 2 est une vue schématique en coupe partielle d'une matelassure selon une deuxième réalisation ;
- la figure 3 est une représentation schématique d'une maille déclinée en trois images, les parties surlignées en noir représentant la tête (figure de gauche), les deux ailes ou jambes (figure centrale), et les deux pieds (figure de droite).

En référence aux figures, on décrit une matelassure 1 pour siège de véhicule automobile, ladite matelassure comprenant successivement :
- une coiffe 2 de garnissage dudit bloc, ladite coiffe étant composée d'une pluralité de formats associés les uns aux autres, notamment par couture, au moins un desdits format étant sous forme de complexe 4 comprenant associées successivement - notamment par chauffage à la flamme - l'une à l'autre:
   o une couche externe de revêtement 5, par exemple à base de textile ou de cuir,
   o une couche médiane en mousse 6,
   o une couche interne en maille 7,
- un circuit électrique 8 destiné à être connecté à un générateur électrique, ledit circuit étant à base d'encre conductrice déposée - notamment par sérigraphie - sur une couche de support 9, ledit circuit s'étendant en regard dudit complexe,
- un bloc de rembourrage 10 élastiquement compressible,
ladite couche de support étant formée :
- soit par ladite couche interne, comme représenté en figure 1,
- soit par une couche additionnelle 11 en maille s'interposant entre ladite couche interne et ledit bloc, comme représenté en figure 2.

Selon une réalisation, le circuit électrique 8 est conformé de manière à former une résistance chauffante.

Dans cette réalisation, quand l'encre est déposée sur une couche additionnelle 11, ladite encre est en particulier déposée, comme représenté en figure 2, vers la couche interne 7, de sorte que le circuit électrique 8 soit au plus près d'un occupant de la matelassure 1 pour optimiser son réchauffement.

Dans cette réalisation, l'épaisseur de la couche médiane 6 est notamment comprise entre 1,5 et 5 mm et sa densité est notamment comprise entre 0,025 et 0,045, de manière à former une barrière thermique minimisée entre le circuit électrique 8 et un occupant de la matelassure 1 pour optimiser son réchauffement.

Dans cette réalisation, le circuit électrique 8 peut notamment être disposé en partie centrale de la coiffe 2.

Selon une autre réalisation, le circuit électrique 8 comprend des moyens de couplage, non représentés, à un système de détection de présence d'un occupant de la matelassure 1, de manière à réaliser le déploiement de moyens de sécurité - notamment sous forme d'airbags - en cas d'accident seulement quand ladite matelassure est occupée selon des critères prédéfinis.

Par exemple, le système de détection peut être agencé pour détecter une augmentation de la résistance du circuit électrique 8 sous l'effet du poids d'un passager occupant la matelassure 1, sachant que l'encre se distend dans une telle situation, avec pour effet d'augmenter sa résistance électrique, et définir alors si les moyens de sécurité doivent être activés.

Dans cette réalisation, l'épaisseur de la couche médiane 6 est notamment comprise entre 1,5 et 5 mm et sa densité est notamment comprise entre 0,025 et 0,045, de manière à ne pas gêner la détection d'un occupant de la matelassure 1.

Selon une réalisation, quand la couche de support 9 est formée par la couche interne 7 :
- elle comprend entre 6 et 10 colonnes de fils / cm et entre 5 et 10 rangées de fils /cm,
- elle présente une masse surfacique comprise entre 25 et 50 g/m²,
- le titre des fils est compris entre 40 et 120 dtex.

La couche de support 9 présente alors un maillage suffisamment dense qui permet que l'encre ne soit sensiblement pas absorbée dans son épaisseur, ce qui permet de disposer d'un circuit électrique 8 fiable.

Selon une réalisation, quand la couche de support 9 est formée par une couche additionnelle 11 :
- elle comprend entre 11 et 16 colonnes de fils / cm et entre 15 et 30 rangées de fils /cm,
- elle présente une masse surfacique comprise entre 175 et 250 g/m²,
- le titre des fils est compris entre 40 et 200 dtex.

La couche de support 9 présente là encore un maillage suffisamment dense qui permet que l'encre ne soit sensiblement pas absorbée dans son épaisseur.

Les différentes valeurs sont dans ce cas généralement plus élevées que dans le cas précédent du fait que la couche de support 9 n'est pas solidaire de la couche médiane en mousse 6, ladite couche de support devant alors présenter des caractéristiques mécaniques améliorées.

Selon diverses réalisations, la couche de support 9 est à base de polyester ou de polyamide.

Selon une réalisation, la coiffe 2 est chaussée sur le bloc de rembourrage 10.

Selon une réalisation, la coiffe 2 est surmoulée, au moins en partie, par le bloc de rembourrage 10, ledit bloc étant à base de mousse moulée, notamment de polyuréthanne.

Selon une réalisation, l'encre conductrice comprend une matrice à base de polyuréthanne dans laquelle sont dispersées des particules conductrices, lesdites particules étant notamment pourvues d'une couche fine d'argent permettant un contact électrique optimisé.

On décrit enfin, de façon non représentée, un siège de véhicule automobile comprenant une armature et une telle matelassure 1, ladite matelassure étant montée en recouvrement de ladite armature.

## Revendications

1. Matelassure (1) pour siège de véhicule automobile, ladite matelassure comprenant successivement :
• une coiffe (2) de garnissage dudit bloc, ladite coiffe étant composée d'une pluralité de formats associés les uns aux autres, au moins un desdits format étant sous forme de complexe (4) comprenant associées successivement l'une à l'autre :
o une couche externe de revêtement (5),
o une couche médiane en mousse (6),
o une couche interne en maille (7),
• un circuit électrique (8) destiné à être connecté à un générateur électrique, ledit circuit étant à base d'encre conductrice déposée sur une couche de support (9), ledit circuit s'étendant en regard dudit complexe,
• un bloc de rembourrage (10) élastiquement compressible,
ladite couche de support étant formée :
• soit par ladite couche interne,
• soit par une couche additionnelle (11) en maille s'interposant entre ladite couche interne et ledit bloc.

2. Matelassure selon la revendication 1, **caractérisée en ce que** le circuit électrique (8) est conformé de manière à former une résistance chauffante.

3. Matelassure selon la revendication 2, **caractérisée en ce que**, quand l'encre est déposée sur une couche additionnelle (11), ladite encre est déposée vers la couche interne (7), de sorte que le circuit électrique (8) soit au plus près d'un occupant de ladite matelassure pour optimiser son réchauffement.

4. Matelassure selon la revendication 1, **caractérisée en ce que** le circuit électrique (8) comprend des moyens de couplage à un système de détection de présence d'un occupant de ladite matelassure, de manière à réaliser le déploiement de moyens de sécurité en cas d'accident seulement quand ladite matelassure est occupée selon des critères prédéfinis.

5. Matelassure selon l'une quelconque des revendications 1 à 4, **caractérisée en ce que**, quand la couche de support (9) est formée par la couche interne (7) :
• elle comprend entre 6 et 10 colonnes de fils /cm et entre 5 et 10 rangées de fils /cm,
• elle présente une masse surfacique comprise entre 25 et 50 g/m²,
• le titre des fils est compris entre 40 et 120 dtex.

6. Matelassure selon l'une quelconque des revendications 1 à 4, **caractérisée en ce que**, quand la couche de support (9) est formée par une couche additionnelle (11) :
• elle comprend entre 11 et 16 colonnes de fils /cm et entre 15 et 30 rangées de fils /cm,
• elle présente une masse surfacique comprise entre 175 et 250 g/m²,
• le titre des fils est compris entre 40 et 200 dtex.

7. Matelassure selon l'une quelconque des revendications 1 à 6, **caractérisée en ce que** la coiffe (2) est chaussée sur le bloc de rembourrage (10).

8. Matelassure selon l'une quelconque des revendications 1 à 6, **caractérisée en ce que** la coiffe (2) est surmoulée, au moins en partie, par le bloc de rembourrage (10), ledit bloc étant à base de mousse moulée.

9. Matelassure selon l'une quelconque des revendications 1 à 8, **caractérisée en ce que** l'encre conductrice comprend une matrice à base de polyuréthanne dans laquelle sont dispersées des particules conductrices.

10. Siège de véhicule automobile comprenant une armature et une matelassure selon l'une quelconque des revendications 1 à 9, ladite matelassure étant montée en recouvrement de ladite armature.

## Patentansprüche

1. Sitzpolsterung (1) für Kraftfahrzeugsitz, wobei die Sitzpolsterung nacheinander Folgendes umfasst:
• eine Fütterungsabdeckung (2) des Blocks, wobei sich die Abdeckung aus einer Vielzahl von Formaten zusammensetzt, die miteinander zusammenhängen, wobei mindestens eines der Formate in Form eines Komplexes (4) ist, der nacheinander, miteinander zusammenhängend Folgendes umfasst:
° eine äußere Belagschicht (5);
° eine Mittelschicht aus Schaumstoff (6),
° eine innere Schicht aus einem Maschenwerk (7),
• einen elektrischen Stromkreis (8), der dazu bestimmt ist, an einen Stromgenerator angeschlossen zu werden, wobei der Stromkreis auf Basis einer leitfähigen Tinte ist, die auf eine Trägerschicht (9) aufgetragen ist, wobei sich der Stromkreis gegenüber dem Komplex erstreckt,
• einen elastisch komprimierbaren Auspolsterungsblock (10),
wobei die Trägerschicht gebildet ist:
• entweder aus der inneren Schicht,
• oder aus einer zusätzlichen Schicht (11) aus einem Maschenwerk, die zwischen der inneren Schicht und dem Block eingesetzt ist.

2. Sitzpolsterung nach Anspruch 1, **dadurch gekennzeichnet, dass** der elektrische Stromkreis (8) derart ausgebildet ist, um einen Heizwiderstand zu bilden.

3. Sitzpolsterung nach Anspruch 2, **dadurch gekennzeichnet, dass** die Tinte auf einer zusätzlichen Schicht (11) aufgetragen ist wobei die Tinte zur inneren Schicht (7) hin aufgetragen ist, sodass der elektrische Stromkreis (8) möglichst nahe an einem Insassen der Sitzpolsterung liegt, um dessen Erwärmung zu optimieren.

4. Sitzpolsterung nach Anspruch 1, **dadurch gekennzeichnet, dass** der elektrische Stromkreis (8) Mittel zum Koppeln mit einem System zum Erkennen einer Anwesenheit eines Insassen der Sitzpolsterung umfasst, um die Entfaltung von Sicherheitsmitteln im Falle eines Unfalls nur dann umzusetzen, wenn die Sitzpolsterung entsprechend vordefinierter Kriterien besetzt ist.

5. Sitzpolsterung nach einem der Ansprüche 1 bis 4, **dadurch gekennzeichnet, dass**, wenn die Trägerschicht (9) durch die innere Schicht (7) gebildet wird:
• sie zwischen 6 und 10 Fadenspalten/cm und zwischen 5 und 10 Fadenreihen/cm umfasst,
• sie eine flächenbezogene Masse aufweist, die zwischen 25 und 50 g/m² enthalten ist,
• der Titer der Fäden zwischen 40 und 120 dtex enthalten ist.

6. Sitzpolsterung nach einem der Ansprüche 1 bis 4, **dadurch gekennzeichnet, dass** wenn die Trägerschicht (9) durch eine zusätzliche Schicht (11) gebildet wird:
• sie zwischen 11 und 16 Fadenspalten/cm und zwischen 15 und 30 Fadenreihen/cm umfasst,
• sie eine flächenbezogene Masse aufweist, die zwischen 175 und 250 g/m² enthalten ist,
• der Titer der Fäden zwischen 40 und 200 dtex enthalten ist.

7. Sitzpolsterung nach einem der Ansprüche 1 bis 6, **dadurch gekennzeichnet, dass** die Abdeckung (2) auf den Auspolsterungsblock (10) aufgesetzt ist.

8. Sitzpolsterung nach einem der Ansprüche 1 bis 6, **dadurch gekennzeichnet, dass** die Abdeckung (2) mindestens teilweise durch den Auspolsterungsblock (10) umgossen ist, wobei der Block auf Basis von Formschaumstoff ist.

9. Sitzpolsterung nach einem der Ansprüche 1 bis 8, **dadurch gekennzeichnet, dass** die leitfähige Tinte eine Matrix auf Basis von Polyurethan umfasst, in der leitfähige Partikel verteilt sind.

10. Kraftfahrzeugsitz, umfassend ein Gestell und eine Sitzpolsterung nach einem der Ansprüche 1 bis 9, wobei die Sitzpolsterung als Überzug des Gestells aufgebracht ist.

## Claims

1. Motor vehicle seat cushioning (1), said cushioning comprising consecutively:
- a cover (2) for lining said block, said cover being comprised of a plurality of formats associated with each other, at least one of said formats being in the form of a complex (4) comprising, associated with each other, in sequence:
-- an outer covering layer (5),
-- a middle foam layer (6),
-- an inner mesh layer (7),
- an electric circuit (8) intended to be connected to an electric generator, said circuit being made from conductive ink deposited on a support layer (9), said circuit extending opposite said complex,
- a block (10) of elastically compressible padding, said support layer being formed:
- either by said inner layer,
- or by an additional mesh layer (11) interposed between said inner layer and said block.

2. Cushioning according to claim 1, **characterised in that** the electric circuit (8) is conformed in such a way as to form a heating resistance.

3. Cushioning according to claim 2, **characterised in that**, when the ink is deposited on an additional layer (11), said ink is deposited towards the inner layer (7), in such a way that the electric circuit (8) is as close as possible to an occupant of said cushioning in order to optimise the heating thereof.

4. Cushioning according to claim 1, **characterised in that** the electric circuit (8) comprises means for coupling to a system for detecting the presence of an occupant of said cushioning, in such a way as to carry out the deployment of means of safety in case of an accident only when said cushioning is occupied according to predefined criteria.

5. Cushioning according to any of claims 1 to 4, **characterised in that**, when the support layer (9) is formed by the inner layer (7):
- it comprises between 6 and 10 columns of yarns /cm and between 5 and 10 rows of yarns /cm,
- it has a surface density comprised between 25 and 50 g/m²,
- the weight of the yarns is comprised between 40 and 120 dtex.

6. Cushioning according to any of claims 1 to 4, **characterised in that**, when the support layer (9) is formed by an additional layer (11):
- it comprises between 11 and 16 columns of yarns /cm and between 15 and 30 rows of yarns /cm,
- it has a surface density comprised between 175 and 250 g/m²,
- the weight of the yarns is comprised between 40 and 200 dtex.

7. Cushioning according to any of claims 1 to 6, **characterised in that** the cover (2) is fitted on the block of padding (10).

8. Cushioning according to any of claims 1 to 6, **characterised in that** the cover (2) is overmoulded, at least partially, by the block of padding (10), said block being made from a moulded foam.

9. Cushioning according to any of claims 1 to 8, **characterised in that** the conductive ink comprises a polyurethane matrix in which conductive particles are dispersed.

10. Motor vehicle seat comprising a framework and a cushioning according to any of claims 1 to 9, said cushioning being mounted as a covering of said framework.
